# EUROPEAN PATENT APPLICATION

(11) **EP 4 307 612 A1**
(43) Date of publication of application: **17.01.2024**
(21) Application number: 23164270.3
(22) Date of filing: 27.03.2023
(51) Int. Cl.: H04L 9/40

(54) **DETECTION PROGRAM, DETECTION APPARATUS, AND DETECTION METHOD**

(30) Priority: 04.07.2022 JP 2022108028
(71) Applicant: FUJITSU LIMITED, Kawasaki-shi, Kanagawa 211-8588 (JP)
(72) Inventor: KOKUBO, Hirotaka, Kawasaki-shi, Kanagawa, 211-8588 (JP); OIKAWA, Takanori, Kawasaki-shi, Kanagawa, 211-8588 (JP)
(74) Representative: Hoffmann Eitle

(57) **Abstract**

A detection program for causing a computer to execute a process including: identifying a terminal performing an anomalous communication, based on a machine learning model trained with normal communications that satisfy a certain condition as training data; and adding, to the training data used for the training of the machine learning model, at least one alert of a first alert group related to a plurality of communications performed by the identified terminal, the at least one alert being identified based on a degree of contribution of a feature included in the alert to the identification.

## Description

### [Technical Field]

The embodiments discussed herein are related to a detection program, a detection apparatus, and detection method.

### [Background Art]

Network-based intrusion detection systems (NIDSs) have been well-known. Such systems issue alerts when any anomalous communication that coincides with detection rule is detected. However, a group of alerts (alert group) issued by an NIDS may include false positive alerts issued when normal communications are misdetected as anomalous communications.

Anomaly detection techniques for detecting suspicious (*e*.*g.* , anomalous) terminals (anomaly hosts) using an alert group including false positive alerts have also been well-known. For example, an anomaly detection technique uses an alert group including false positive alerts to train a machine learning model so that states in which an NIDS misjudges communications as anomalous communications despite of being normal communications are regarded as normal states (states without attacks). Upon screening of an alert group, the anomaly detection technique inputs an alert into a machine learning model that has been trained, and determines that a communication pertaining to that alert is an anomalous communication (it is not a false positive alert) when an inference result acquired from the input alert indicates a deviation from normal states. The anomaly detection technique then identifies a terminal that has performed the anomalous communication as an anomaly host.

### [CITATION LIST]

### [PATENT DOCUMENT]

Patent Document 1: International Publication Pamphlet No. WO 2020/004315
Patent Document 2: International Publication Pamphlet No. WO 2021/149225
Patent Document 3: US Patent Application Publication No. 2021/0365774
Patent Document 4: US Patent Application Publication No. 2019/0138938

### [Summary of Invention]

### [Problems to be Solved by Invention]

In the anomaly detection technique, to keep up with updates to anomalous communication techniques, such as attacks and the like, acquisition of new training data over time to retrain the machine learning model is important. In an anomaly detection technique, at least an alert group related to an anomaly host is discarded from an alert group issued by an NIDS. Because alerts related to the anomaly host also include alerts on normal communications (false positive alerts), discarding the entire alert group related to the anomaly host may make ensuring a sufficient volume of training data difficult, which may affect the accuracy of the model.

On the other hand, when all alerts in an alert group issued by the NID are used as training data, dangerous cyber attacks (hereinafter referred to as "attacks") become gradually undetectable if alerts related to such attacks are added. This is because if training data includes a lot of alerts similar in types, those alerts are no longer "abnormal" alerts (they are regarded as normal communications). As a result, alerts indicating actual attacks might not be detected as "attacks".

Hence, the training accuracy of a machine learning model involving an anomaly detection may be declined, and the attack detection capability may be reduced.

In one aspect, an object of the present disclosure is to improve the learning accuracy of a machine learning model that detects anomalous communications, in anomaly detections.

### [Means to Solve the Problem]

According to an aspect of the embodiments, a detection program for causing a computer to execute a process including: identifying a terminal performing an anomalous communication, based on a machine learning model trained with normal communications that satisfy a certain condition as training data; and adding, to the training data used for the training of the machine learning model, at least one alert of a first alert group related to a plurality of communications performed by the identified terminal, the at least one alert being identified based on a degree of contribution of a feature included in the alert to the identification.

### [Effect of Invention]

In one aspect, the present disclosure can improve the learning accuracy of a machine learning model that detects anomalous communications.

### [Brief Description of Drawing]

FIG. 1 is a block diagram illustrating an example of a hardware (HW) configuration of a computer embodying functions of an anomaly detection apparatus according to one embodiment;
FIG. 2 is a diagram illustrating one example of a system to which the anomaly detection apparatus is applied;
FIG. 3 is a block diagram illustrating an example of the functional configuration of the anomaly detection apparatus according to one embodiment in a training phase;
FIG. 4 is a diagram illustrating an example of the operation of the anomaly detection apparatus according to one embodiment in an inference phase;
FIG. 5 is a block diagram illustrating an example of the functional configuration of the anomaly detection apparatus according to one embodiment in the inference phase;
FIG. 6 is a diagram illustrating one example of an anomaly host identification process by the anomaly host detection unit;
FIG. 7 is a diagram illustrating one example of a process of identifying a first alert group by a first alert group identification unit.
FIG. 8 is a diagram illustrating one example of the relationship between a plurality of features in each first alert included in a first alert group and the corresponding degrees of contribution thereof to identification of that first alert;
FIG. 9 is a diagram illustrating one example of an identification process of second alerts by the alert identification unit;
FIG. 10 is diagram illustrating a first example of a degree of contribution calculation process by the degree of contribution calculation unit;
FIG. 11 is a diagram illustrating a first example of a degree of contribution calculation result by the degree of contribution calculation unit;
FIG. 12 is a diagram illustrating a second example of the degree of contribution calculation process by the degree of contribution calculation unit;
FIG. 13 is a diagram illustrating a third example of the degree of contribution calculation process by the degree of contribution calculation unit;
FIG. 14 is a flowchart illustrating one example of an operation by the anomaly detection apparatus according to one embodiment in the training phase;
FIG. 15 is a flowchart illustrating one example of an operation upon generation of a training alert group by the anomaly detection apparatus according to one embodiment;
FIG. 16 is a block diagram illustrating an example of the functional configuration of an anomaly detection apparatus according to a modification in the inference phase;
FIG. 17 is a diagram illustrating one example of an operation by the anomaly detection apparatus according to the modification in the inference phase;
FIG. 18 is a diagram illustrating one example of a process of preventing identification of a second alert by a prevention unit; and
FIG. 19 is a flowchart illustrating one example of an operation upon generation of a training alert group by the anomaly detection apparatus according to the modification.

### [Description of Embodiment(S)]

Hereinafter, an embodiment of the present disclosure will be described with reference to the drawings. Note that the embodiment that will be described is merely exemplary, and it is not intended to exclude various variations or applications of techniques that are not described. For example, the present embodiment may be modified in various forms without departing from the scope thereof. In the drawings used in the following description, elements denoted by the like reference symbols denote the same or similar elements unless otherwise stated.

### [1] One embodiment

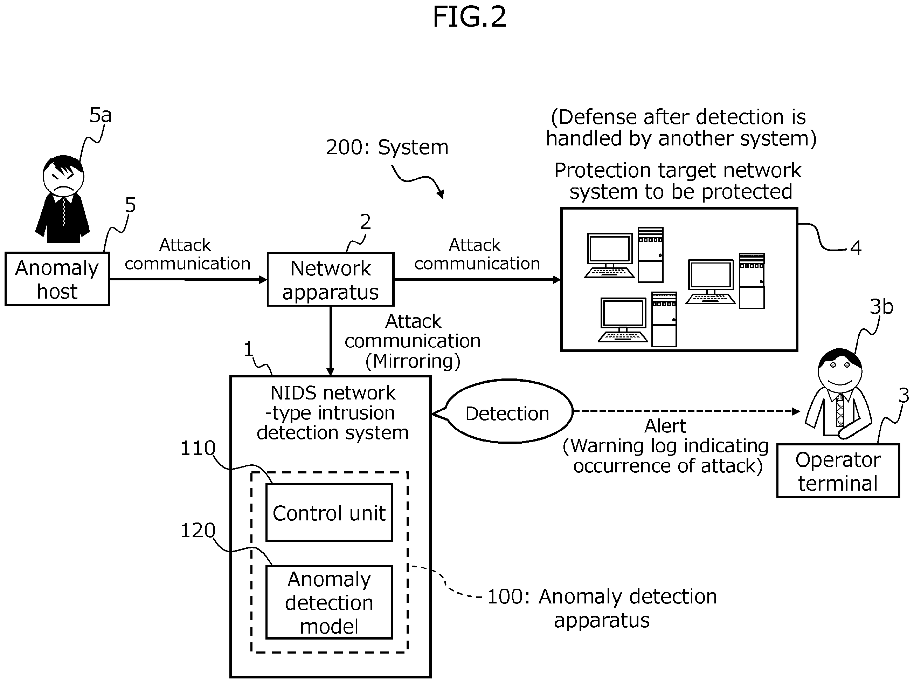

Hereinafter, a technique for improving the learning accuracy of a machine learning model for detecting anomalous communications in anomaly detection will be described with reference to an anomaly detection apparatus 100 according to one embodiment (see FIG. 2) as an example.

### [1-1] Example of hardware configuration

An anomaly detection apparatus 100 according to one embodiment represents one example of a detection apparatus. The anomaly detection apparatus 100 may be an NIDS *per* se or an apparatus connected to an NIDS, as will be described below. The anomaly detection apparatus 100 may be a virtual server (VM; Virtual Machine), or may be a physical server. The functions of the anomaly detection apparatus 100 may be embodied by a single computer, or may be embodied by two or more computers. Furthermore, at least some of functions of the anomaly detection apparatus 100 may be embodied through hardware (HW) resources and network (NW) resources provided by a cloud environment.

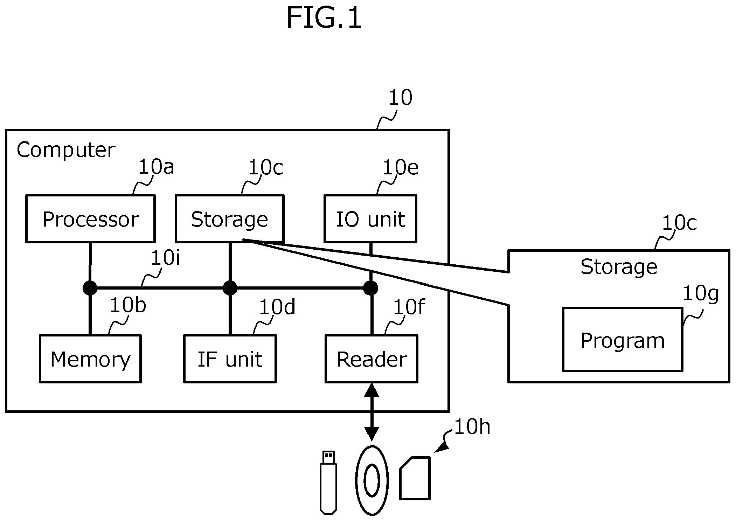

FIG. 1 is a block diagram illustrating an example of the hardware (HW) configuration of a computer 10 that implements the functions of the anomaly detection apparatus 100 according to one embodiment. In the case where a plurality of computers are used as HW resources to embody the functions of the anomaly detection apparatus 100, each computer may include the HW configuration illustrated in FIG. 1.

As illustrated in FIG. 1, the computer 10 may include, by way of example, a processor 10a, a memory 10b, a storage 10c, an interface (IF) unit 10d, an input/output (IO) unit 10e, and a reader 10f, as the HW configuration.

The processor 10a represents one example of a processing unit configured to perform a wide variety of controls and computations . The processor 10a may be communicatively connected to each block in the computer 10 to each other via a bus 10i. The processor 10a may be a multiprocessor including a plurality of processors or may be a multi-core processor including a plurality of processor cores, or may have a configuration including a plurality of multi-core processors.

Examples of the processor 10a include an integrated circuit (IC), such as a CPU, an MPU, a GPU, an APU, a DSP, an ASIC, and an FPGA, for example. A combination of two or more of these integrated circuits may be used as the processor 10a. CPU is an abbreviation for Central Process Unit, and MPU is an abbreviation for Micro Process Unit. GPU is an abbreviation for Graphics Process Unit, and APU is an abbreviation for Accelerated Process Unit. DSP is an abbreviation for Digital Signal Processor, ASIC is an abbreviation for Application Specific IC, and FPGA is an abbreviation for Field-Programmable Gate Array.

For example, in the case where the anomaly detection apparatus 100 performs a machine learning process in addition to an attack detection process according to one embodiment, the processor 10a may be a combination of a processing unit, such as CPU, which performs the attack detection process and an accelerator which performs the machine learning process. Examples of the accelerator include a GPU, an APU, a DSP, an ASIC, and an FPG described above, for example.

The memory 10b represents one example of HW configured to store information, such as a wide variety of data and programs. Examples of the memory 10b include either or both of a volatile memory, such as a Dynamic Random Access Memory (DRAM), and a nonvolatile memory, such as a Persistent Memory (PM).

The storing unit 10c represents one example of HW configured to store information, such as a wide variety of data and programs . Examples of the storage 10c include a wide variety of storage devices, such as a magnetic disk device, e.g. a Hard Disk Drive (HDD), and a semiconductor drive device, *e.g*., a Solid State Drive (SSD), and a nonvolatile memory. Examples of the nonvolatile memory include a flash memory, a Storage Class Memory (SCM), and a Read Only Memory (ROM).

The storage 10c may store a program 10g (detection program) that embodies all or a part of the various functions of the computer 10.

For example, the processor 10a in the anomaly detection apparatus 100 can embody the functions of the anomaly detection apparatus 100 (control unit 110 exemplified in FIG. 2) to be described later by expanding and executing the program 10g stored in the storage 10c into the memory 10b.

The IF unit 10d represents one example of a communication IF configured to perform controls on connections and communications between the anomaly detection apparatus 100 and various networks, including networks between unillustrated devices. Examples of such devices include network devices that provide the anomaly detection apparatus 100 with data, computers such as servers which perform machine learning processes based on data output from the anomaly detection apparatus 100, and user (operator) terminals that receive alerts, for example.

For example, the IF unit 10d may include an adapter compliant with a local area network (LAN) standard such as the Ethernet^{®} or an optical communication standard such as the Fibre Channel (FC) . The adapter may support either or both of wireless and wired communication techniques.

Note that the program 10g may be downloaded to the computer 10 from the network via the communication IF and stored in the storage 10c.

The IO unit 10e may include either or both of an input device and an output device. Examples of the input device include a keyboard, a mouse, and a touch panel, for example. Examples of the output device include a monitor, a projector, and a printer, for example. Furthermore, the IO unit 10e may include a touch panel or any other device in which an input device and a display device are integrated.

The reader 10f represents one example of a reader that reads data and information of a program recorded on a recording medium 10h. The reader 10f may include a connection terminal or device to which the recording medium 10h can be connected or inserted. Examples of the reader 10f include an adapter compliant with the Universal Serial Bus (USB) or any of other standards, a drive device for accessing a recording disk, and a card reader for accessing a flash memory, such as an SD card, for example. Note that the recording medium 10h may store the program 10g, and the reader 10f may read the program 10g from the recording medium 10h and store it in the storage 10c.

Examples of the recording medium 10h may include non-transitory computer-readable recording media, such as magnetic/optical disks and flash memories, for example. Examples of magnetic/optical disks may include flexible disks, compact discs (CDs), digital versatile discs (DVDs), Blu-ray discs, and holographic versatile discs (HVDs), for example. Examples of flash memories may include USB memories and SD cards, for example.

The above-described HW configuration of the computer 10 is merely exemplary. Accordingly, in the computer 10, HW may be added or omitted (*e.g*. , any blocks may be added or omitted), divided, or combined in any combinations, or a bus may be added or omitted, where it is deemed appropriate.

FIG. 2 is a diagram illustrating one example of a system 200 to which the anomaly detection apparatus 100 is applied. The system 200 may include an NIDS 1, a network apparatus 2, an operator terminal 3, and a network system 4 to be protected.

In FIG. 2, an attacker 5a performs an attack communication from an attacker terminal. The attacker terminal makes an attack on the network system 4 to be protected, via the network apparatus 2. The attacker terminal represents one example of an anomaly host 5 which is a terminal performing an anomalous communication. The anomaly host 5 is a computer that performs an abnormal operation, such as an abnormal communication.

The network apparatus 2 may be a communication apparatus, such as a router or a hub. The NIDS 1 is communicatively connected to the network apparatus 2. The NIDS 1 acquires communication data sent from and received by the network apparatus 2 through mirroring. The NIDS 1 is a network-based intrusion detection system that analyzes acquired communication data and issues an alert when any communication that coincides with a detection rule is detected. The NIDS 1 may send the alert to the operator terminal 3 of an operator 3b.

An alert is information indicating a detection of a communication that coincides with the detection rule, and may be, as one example, a warning log indicating occurrence of an attack. For example, an alert group issued by the NIDS 1 may include false positive alerts issued when normal communications are misdetected as anomalous communications. If the number of false positive alerts increases, there is a risk of alert fatigue in which the operator 3b engaging in monitoring become desensitized to alerts, resulting in a delay of a response to an alert on an actual attack.

The anomaly detection system 100 uses an anomaly detection technique for screening of an alert group issued by the NIDS 1. The anomaly detection apparatus 100 may be the NIDS 1 *per se,* or may be an apparatus included in the NIDS 1, or may be an apparatus connected to the NIDS 1 via a network.

The anomaly detection technique is a technique that learns states in which the NIDS 1 misjudges normal communications as anomalous communications, so that states (anomalies) deviating from such states become detectable. The anomaly detection apparatus 100 has a control unit 110.

The control unit 110 uses the training data to implement the learning process (training process) in machine learning. In other words, the anomaly detection apparatus 100 trains an anomaly detection model 120 (machine learning model) by the control unit 110.

The control unit 110 identifies an anomaly host 5 performing an anomalous (abnormal) communication based on the anomaly detection model 120 that has been already trained. The control unit 110 identifies a first alert group related to a plurality of communications performed by the anomaly host 5. The control unit 110 may perform a control to notify information on the anomaly host 5 of the operator terminal 3. The control unit 110 adds, to the training data used for training of the anomaly detection model 120, at least one alert of the first alert group. The process by the control unit 110 will be described later.

### [1-2] Example of functional configuration

### [1-2-1] Training phase

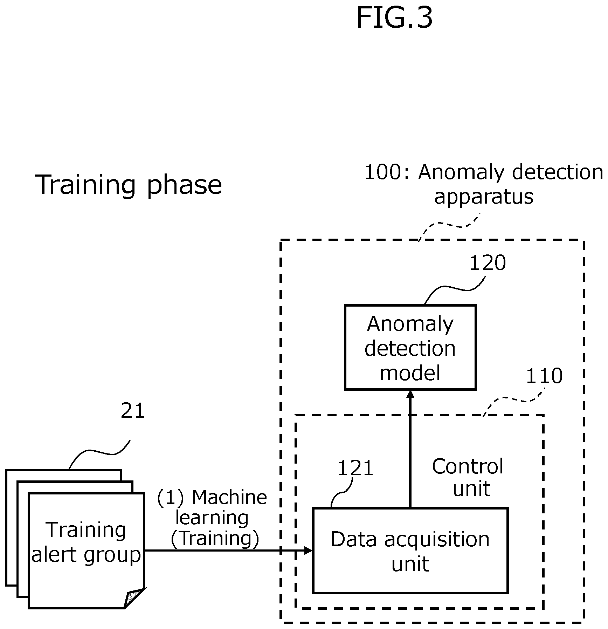

FIG. 3 is a block diagram illustrating an example of the functional configuration of the anomaly detection apparatus 100 according to one embodiment in a training phase. The control unit 110 may include a data acquisition unit 121. The data acquisition unit 121 acquires data. In the training phase, the data acquisition unit 121 acquires a training alert group 21. The training alert group 21 represents one example of training data. The training data may be supervised data or semi-supervised data.

The training alert group 21 includes false positive alerts. The training alert group 21 may include false positive alerts at a percentage of preferably 80% or more, more preferably 90% or more. All alerts in the training alert group 21 may be false positive alerts. In selection of the training alert group 21, alerts related to truly anomalous communications (*e*.*g.*, attacks) may be excluded. When the model is trained for the first time, the training alert group 21 may be a real alert group which is a set of alerts issued by the NIDS 1 when the NIDS 1 determines that the corresponding communications are anomalous, or may be training data acquired from an external source. In second and subsequent training of the anomaly detection model 120, a third alert group identified in an inference phase is added to the training alert group 21, so that the updated training alert group 21 is used. The third alert group will is discussed later.

The control unit 110 trains the anomaly detection model 120 based on a false positive alert issued on a communication misjudged by the NIDS 1 as an anomalous communication despite of being a normal communication, so that states in which normal communications are misjudged as anomalous communications are regarded as normal states (states without attacks). A communication misdetected as an anomalous communication despite of being a normal communication represents one example of a normal communication that satisfies a certain condition.

### [1-2-2] Inference phase

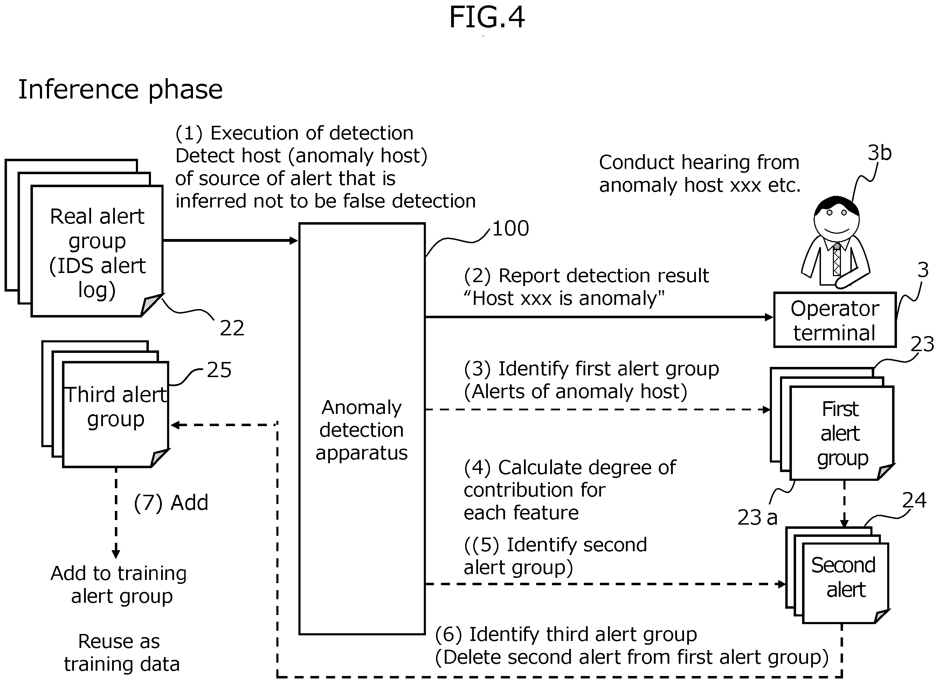

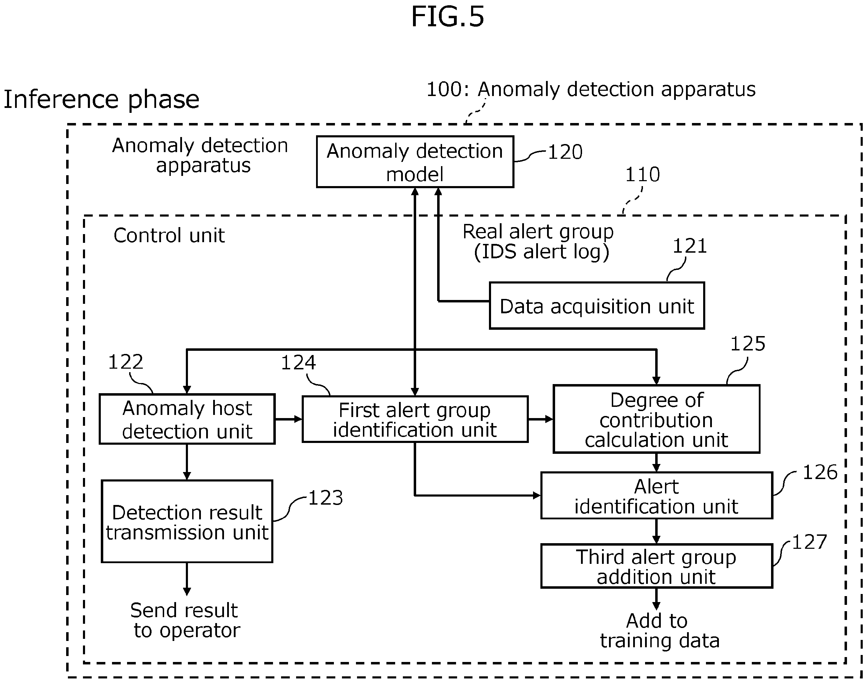

FIG. 4 is a diagram illustrating an example of the operation of the anomaly detection apparatus 100 according to one embodiment in the inference phase. In the inference phase, the anomaly detection apparatus 100 acquires a real alert group 22 (see FIG. 5) from the NIDS 1. The real alert group 22 is a set of alerts issued by the NIDS 1 when the NIDS 1 determines that communications are anomalous. The real alert group 22 may also be referred to as an IDS alert log. The process for generating the real alert group 22 by the NIDS 1 may be embodied by various well-known techniques.

The anomaly detection apparatus 100 (*e.g*., the control unit 110) may perform the following processes (1) to (7).

### (1) Execution of detection

The control unit 110 performs screening of the real alert group 22. When the real alert group 22 is input into the trained anomaly detection model 120 and the inference result obtained from the input indicates a deviation from normal states, the control unit 110 may determine that the alert is an alert related to a truly anomalous communication (is not a false positive alert) . The control unit 110 may then identify (detect) the causal host that is the source of the anomalous communication (*e.g*. , a packet) as an anomaly host 5. Note that the control unit 110 may classify alerts in the real alert group 22 based on source hosts (terminals), and may make determinations on behaviors of communications by each host to detect an anomaly host 5. A plurality of anomaly hosts 5 may be detected through the screening of the real alert group 22.

### (2) Report of detection result

The detection result on the anomaly host 5 is reported to the operator terminal 3 of the operator 3b. The detection result may include information to specify the anomaly host 5, such as the Internet Protocol (IP) address, as an example. In response to receiving the report, the operator 3b may conduct a hearing from the user, etc. of the anomaly host 5 or make any other action. In this manner, according to the anomaly detection apparatus 100, through the screening of the real alert group 22 output from the NIDS 1, an alert related to a communication that is truly anomalous (is not a false positive alert) is extracted from the real alert group 22 and a notification to the operator terminal 3 is made. This reduces the frequency of alerts received by the operator 3b.

### (3) Identification of first alert group 23

The control unit 110 identifies a first alert group 23 related to a plurality of communications performed by the identified anomaly host 5. The first alert group 23 may include a plurality of first alerts 23a. The first alert group 23 is also referred to as anomaly host alert group.

### (4) Calculation of degree of contribution of each feature

The control unit 110 calculates the degree of contribution made by a feature included in each of the first alerts 23a, to the identification in the process (3) of identifying the first alerts 23a. The degree of contribution is an indicator of the degree of the basis provided by the feature in the identification of the anomaly host 5 as a host performing an anomalous communication.

### (5) Identification of second alert 24

The control unit 110 identifies one or more second alerts 24 which are one or more alerts in the first alert group 23 and which have calculated degrees of contribution satisfying a certain first condition. The second alert(s) 24 represents one example of a second alert. When more than one second alerts 24 are present, the second alerts 24 may be referred to as a second alert group.

### (6) Identification of third alert group 25

The control unit 110 identifies a third alert group 25, the third alert group 25 being the first alert group 23 excluding the second alert (s) 24. The third alert group 25 represents one example of a third alert.

Note that the control unit 110 may identify, from the first alert group 23, a third alert group 25 composed of a plurality of alerts having degrees of contribution satisfying a certain condition. The certain condition may be the opposite of the first condition. In this case, the control unit 110 may omit performing the identification process of second alerts described in (5) above, or may perform the identification process of the third alert group 25 in parallel with the identification process of second alerts. Identifications of the second alert 24 and the third alert group 25 will be described later.

### (7) Addition of third alert group

The control unit 110 adds at least one alert of the third alert group 25 to the training alert group 21. This allows the at least one alert of the third alert group 25 related to a communication by the anomaly host 5 to be reused as training data.

Now referring to FIG. 5, the functional configuration of the control unit 110 that performs the above-described operation will be described. FIG. 5 is a block diagram illustrating an example of the functional configuration of the anomaly detection apparatus 100 according to one embodiment in the inference phase.

As illustrated in FIG. 5, the anomaly detection apparatus 100 may include a data acquisition unit 121, an anomaly host detection unit 122, a detection result transmission unit 123, a first alert group identification unit 124, a degree of contribution calculation unit 125, an alert identification unit 126, and a third alert group addition unit 127. The data acquisition unit 121, the anomaly host detection unit 122, the detection result transmission unit 123, the first alert group identification unit 124, the degree of contribution calculation unit 125, the alert identification unit 126, and the third alert group addition unit 127 represent one example of the control unit 110.

In the inference phase, the data acquisition unit 121 acquires a real alert group 22 (see FIG. 4) from the NIDS 1.

The anomaly host detection unit 122 identifies an anomaly host 5 performing an anomalous communication based on an anomaly detection model 120 that has been already trained. The detection result transmission unit 123 transmits the detection result on the anomaly host 5 to the operator terminal 3 of the operator 3b or the like.

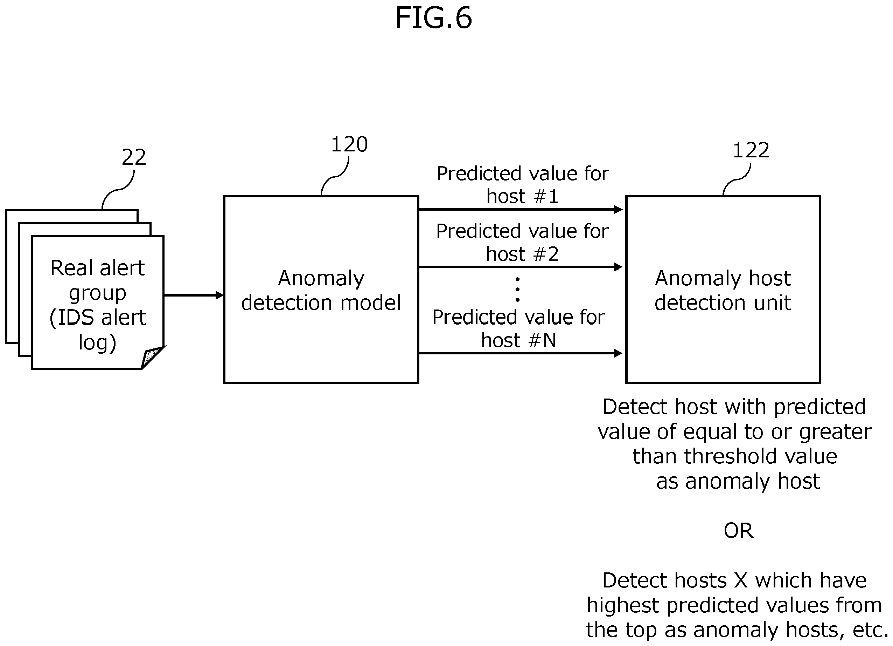

FIG. 6 is a diagram illustrating one example of the anomaly host identification process by the anomaly host detection unit 122. The anomaly host detection unit 122 inputs a real alert group 22 into the anomaly detection model 120 that has been already trained.

In the inference step, the anomaly host detection unit 122 acquires a predicted value for each terminal (host) based on the inference result acquired through the input of the real alert group 22 into the anomaly detection model 120. In the example in FIG. 6, N terminals: Host #1, Host #2, ..., and Host #N (N is an integer of 1 or more) are assumed to be present. The predicted value is information regarding whether or not the corresponding terminal is an anomaly host 5, and it may be a value associated with the probability (likelihood) that the corresponding terminal is an anomaly host 5, for example. The predicted value may be the inference result *per se,* or it may be calculated from the inference result.

The anomaly host detection unit 122 may detect (identify) a terminal (host) which has a predicted value equal to or greater than a certain threshold value *x*, as an anomaly host 5. Alternatively, the anomaly host detection unit 122 may detect (identify) X terminal (s) (host (s)) (X is an integer of 1 or more) having highest predicted values from the top, as anomaly host (s) 5. The detection of the anomaly hosts 5 may involve identifying the IP addresses of the possible anomaly hosts 5, for example.

Referring back to FIG. 5, the first alert group identification unit 124 identifies a first alert group 23.

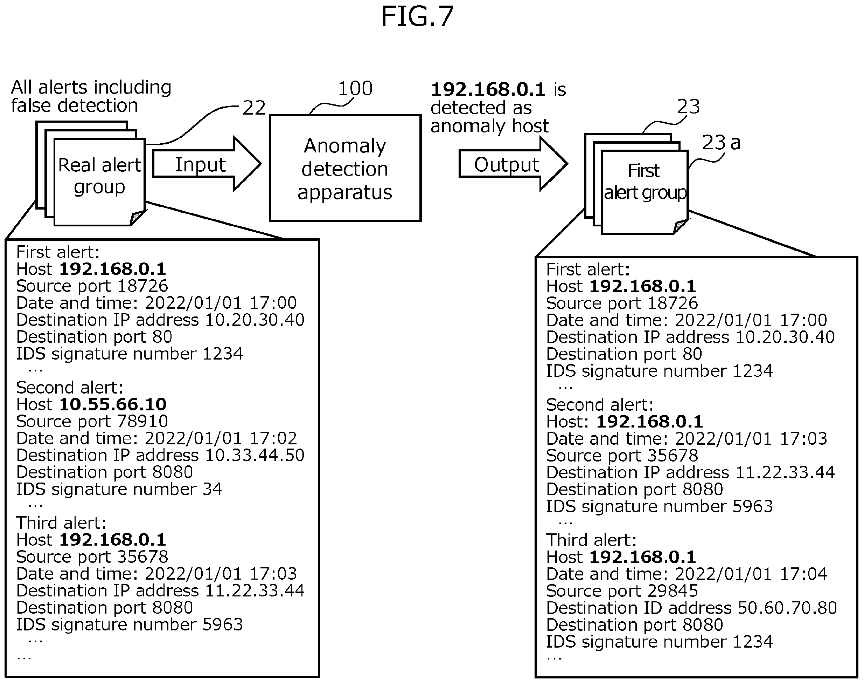

FIG. 7 is a diagram illustrating one example of the process of identifying a first alert group 23 by the first alert group identification unit 124.

As illustrated in FIG. 7, each alert may include items such as information indicating the terminal from which a communication has been sent (source IP address), the source port, the date and time when the alert has been issued, the destination IP address, the destination port, and the IDS signature number, and values of these items. The IDS signature number may be information indicating the type of an attack (anomaly).

The first alert group identification unit 124 identifies, from the real alert group 22, alerts of which source (host) IP address coincides with the IP address of the anomaly host 5, as a first alert group 23. In the example in FIG. 7, the first alert group identification unit 124 identifies, from the real alert group 22, the alerts including First alert and Third alert of which source (host) IP addresses coincide with the IP address 192.168.0.1 of the anomaly host 5, as the first alert group 23.

Referring back to FIG. 5, the degree of contribution calculation unit 125 calculates, for each first alert 23a in the first alert group 23, the respective degrees of contribution provided by the features included in the each alert 23a, to the identification of the anomaly host 5. The feature may be a combination of an item in each first alert 23a in the first alert group 23 and the value of that item.

The alert identification unit 126 identifies at least one alert of the first alert group 23 as an alert to be added to the training alert group 21 (third alert group 25), the at least one alert being identified based on the degree of contribution included in the first alert 23a.

The third alert group addition unit 127 adds at least one alert of the third alert group 25 to the training alert group 21. Note that the third alert group addition unit 127 may add all alerts in the third alert group 25 to the training alert group 21.

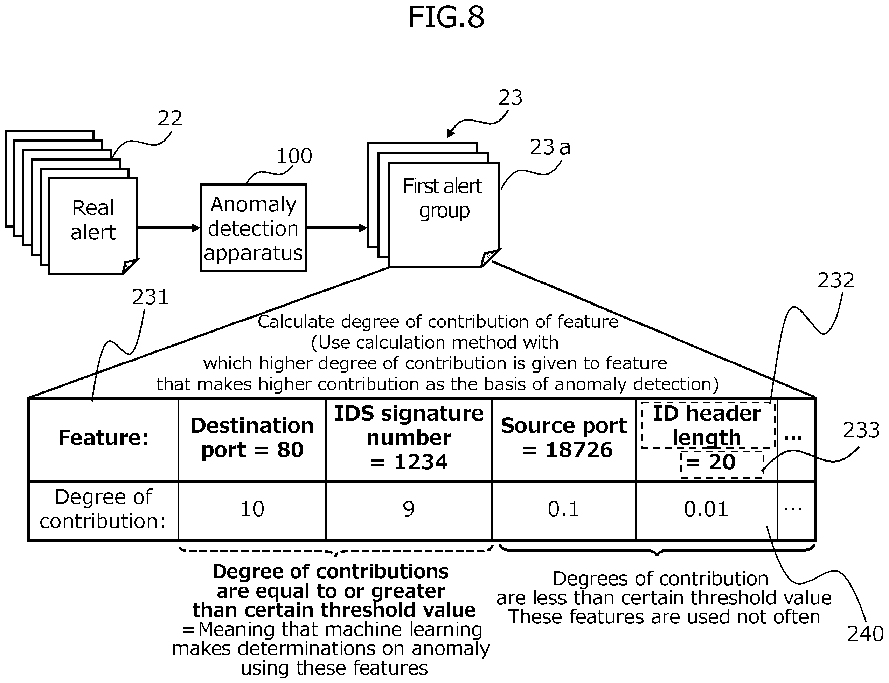

FIG. 8 is a diagram illustrating one example of the relationship between a plurality of features in each first alert 23a included in the first alert group 23a, and the corresponding degrees of contribution thereof to identification of the first alert 23a.

In the first alert 23a illustrated in FIG. 8, a plurality of features 231 are included, such as the destination port = 80, the IDS signature number = 1234, the source port = 18726, and the IP head length = 20. The features 231 may be a combination of a plurality of items 232 (e.g., the IP head length) and the values 233 (e.g., 20) of these items.

The degree of contribution calculation unit 125 calculates the degree of contribution 240 of each of the plurality of features 231. The first alert 23a illustrated in FIG. 8 includes a plurality of features, including the following features 231: the destination port = 80, the IDS signature number = 1234, the source port = 18726, and the IP head length = 20. The degree of contribution calculation unit 125 calculates the degrees of contribution 240 of the features 231 to be "10", "9", "0.1", and "0.01", respectively.

For example, the alert identification unit 126 may add a first alert 23a of the first alert group 23 to the third alert group 25, wherein the degree of contribution 240 of each feature 231 of the first alert 23a satisfies the certain condition. The certain condition is, for example, whether or not the degree of contribution 240 of a feature 231 is less than a certain threshold value.

In the first alert 23a in FIG. 8, the features 231 are broadly classified into two types: features 231 with high degrees of contribution equal to or greater than a certain threshold value (*e*.*g.,* 1), and features 231 with low degrees of contribution less than the certain threshold value (*e*.*g*., 1) . In FIG. 8, the features "destination port = 80" and "IDS signature number = 1234" are determined to be features with high degrees of contribution, while the features "source port = 18726" and "IP head length = 20" are determined to be features with low degrees of contribution.

In the method of identifying the second alerts 24 and the third alert group 25, a degree of contribution 240 being equal to or greater than a certain threshold value means that the corresponding feature 231 is likely to have contributed to identification of a source terminal of a communication as an anomaly host 5. A greater degree of contribution 240 indicates that the degree of contribution is high. Conversely, a degree of contribution 240 less than the certain threshold value means that the corresponding feature 231 is less likely to have contributed to identification of a source terminal of the communication as an anomaly host 5.

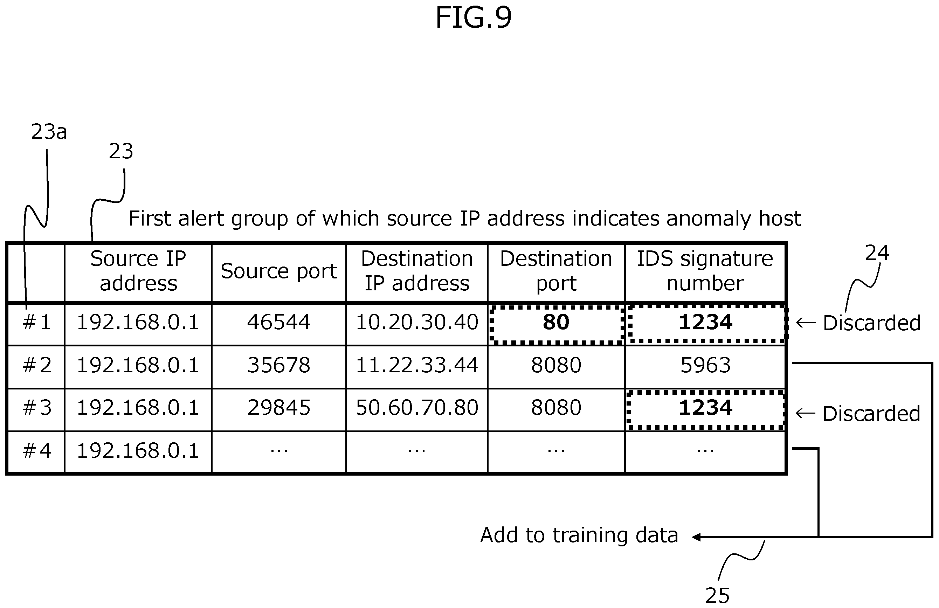

FIG. 9 is a diagram illustrating one example of the identification process of second alerts 24 by the alert identification unit 126. In FIG. 9, features 231 of which degree of contribution 240 are equal to or greater than a certain threshold value are bordered by dotted lines.

In FIG. 9, the alert identification unit 126 may identify, from the first alert group 23, one or more alerts where the degree of contribution 240 of the feature 231 included in the first alert 23a satisfies a certain first condition, as second alert (s) 24.

In FIG. 9, the first condition may be such that the degree of contribution 240 of at least one feature 231 included in the first alert 23a is equal to or greater than a certain threshold value. The alert identification unit 126 may identify Alerts #1 and #3 that satisfy the first condition as second alerts 24.

In one method of identifying the third alert group 25 by the alert identification unit 126, the alert identification unit 126 deletes the second alert 24 from the first alert group 23. As a result, the first alert group 23 including a first alert(s) remaining undeleted is identified as the third alert group 25. In FIG. 9, the alert identification unit 126 deletes (discards) the second alerts 24 (Alerts #1 and #3) from the first alert group 23 (Alerts #1 to #4), so that remaining Alert #2 and Alert #4 are identified as the third alert group 25. The third alert group 35 is added to the training alert group 21 (training data).

In another method of identifying the third alert group 25 by the alert identification unit 126, the alert identification unit 126 may identify, from the first alert group 23, a third alert group 25 composed of a plurality of alerts where the degrees of contribution 240 satisfy a certain condition. The certain condition may be the opposite of the first condition. The certain condition may be such that the degree of contribution 240 of each feature 231 included in the first alert 23a is less than a certain threshold value. In FIG. 9, the alert identification unit 126 identifies Alerts #2 and #4 as third alerts satisfying the certain condition.

The method used to calculate the degree of contribution 240 for identifying the third alert group 25 from the first alert group will be described.

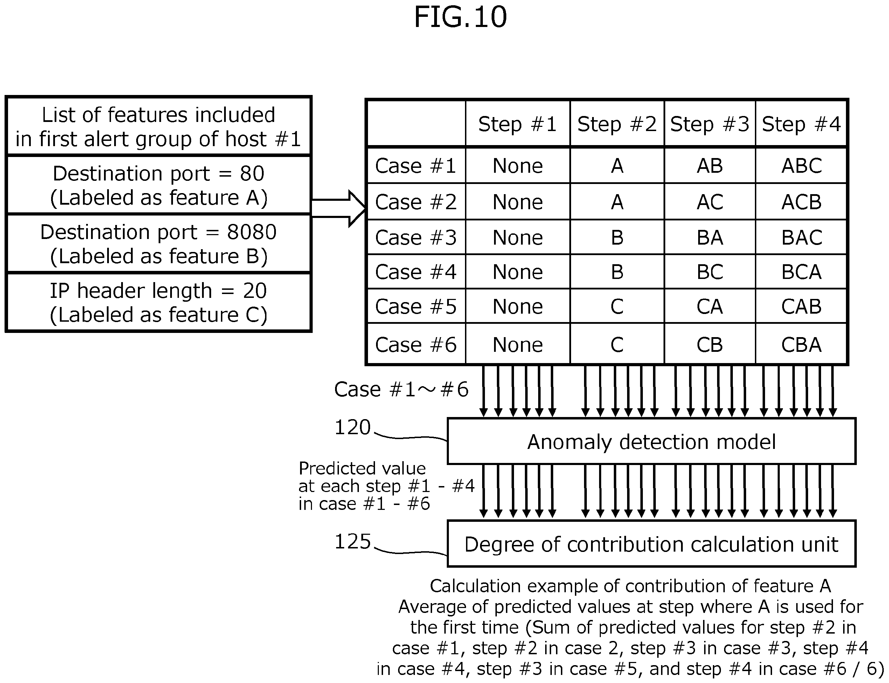

FIG. 10 illustrates a first example of the degree of contribution calculation process by the degree of contribution calculation unit 125. In the example in FIG. 10, the degree of contribution calculation unit 125 calculates Shapley values as the degrees of contribution 240. In FIG. 10, the degree of contribution calculation unit 125 calculates the degree of contribution 240 of each feature 231 based on changes of the predicted values in each step when the feature 231 is changed stepwise (*e.g.,* it is slightly increased).

In FIG. 10, description will be made with reference to the case where the first alert group 23 for Host #1 includes the following features 231: Feature A (destination port = 80), Feature B (destination port = 8080), and Feature C (IP header length = 20).

Cases #1 to #6 indicate patterns of combinations of Features A to C in Steps #1 to #4. In Cases #1 to #6, neither of the features 231 is used in Step #1. In Step #2, one of features 231 A, B, and C is used. In Step #3, a combination of two features, *i.e.,* the feature 231 used in Step #2 and one of the remaining features 231, is used. In Step #4, a combination of three features, i.e., the two features 231 used in Step #3 and the one remaining feature 231, is used.

The degree of contribution calculation unit 125 uses the anomaly detection model 120 to calculate 24 predicted values for Cases #1 to #6 based on 24 (6 × 4) patterns of alerts using the features 231 used in Steps #1 to #6. As the number of features 231 increases with an increase in the number of steps, the number of predicted values also increases.

When *n* features are present in a first alert 23a, the number of cases is n! , and the number of steps is n + 1. Hence, the anomaly detection model 120 calculates (n + 1)·n! predicted values based on (n + 1)·n! patterns of alerts.

In each of Cases #1 to #6, the degree of contribution calculation unit 125 may determine the Shapley value of each feature 231 by calculating the average of the increases in predicted values at the step where the feature 231 is used for the first time. The Shapley value of Feature A is a value of (the sum of the increases in the predicted values of Step #2 in Case #1, Step #2 in Case #2, Step #3 in Case #3, Step #4 in Case #4, Step #3 in Case #5, and Step #4 in Case #6) divided by the number of cases (*i.e.,* 6) .

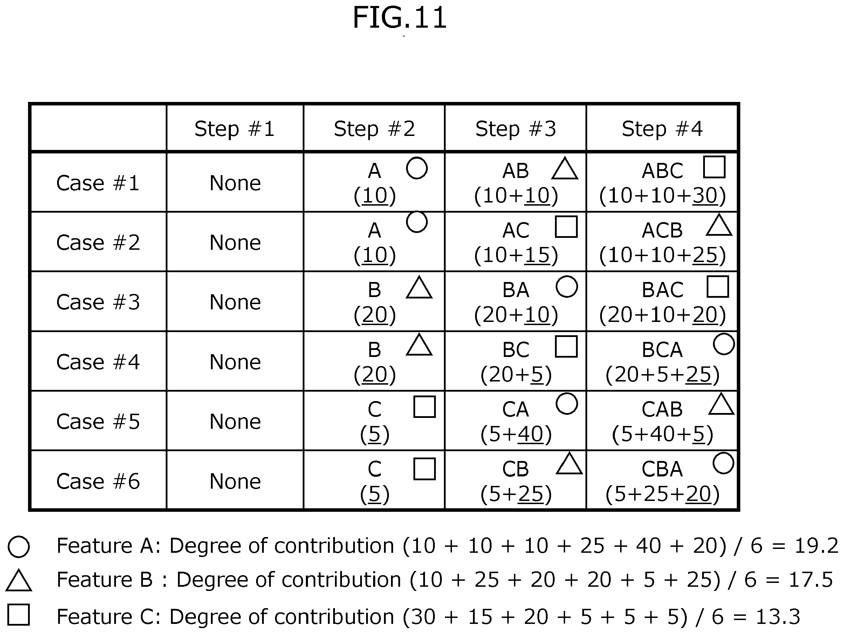

FIG. 11 is a diagram illustrating a first example of the degrees of contribution calculation result by the degree of contribution calculation unit 125. In Cases #1 to #6, the steps at which Feature A is used for the first time are marked with circles. In Cases #1 to #6, the steps at which Feature B is used for the first time are marked with triangles. In Cases #1 to #6, the steps at which Feature C is used for the first time are marked with squares.

With regard to Feature A, the average of the increases in predicted values of each feature 231 at the step where the feature 231 is used for the first time, *i.e.,* the degree of contribution 240 (Shapley value) of Feature A, is (10 + 10 + 10 + 25 + 40 + 20) / 6 ≅ 19.2. With regard to Feature B, the average of the increases in predicted values of each feature 231 at the step where the feature 231 is used for the first time, *i.e.,* the degree of contribution 240 (Shapley value) of Feature B, is (10 + 25 + 20 + 20 + 5 + 25) / 6 = 17.5. With regard to Feature C, the average of the increases in predicted values of each feature 231 at the step where the feature 231 is used for the first time, *i.e.,* the degree of contribution 240 (Shapley value) of Feature C, is (30 + 15 + 20 + 5 + 5 + 5) / 6 ≅ 13.3. Thus, the descending order of values of the degree of contribution 240 is Features A, B, and C.

The degrees of contribution 240, however, are not limited to Shapley values. As the number of features n increases, the volume of computations for calculating Shapley values increases. Thus, in place of the actual Shapley value, an approximation of the Shapley value may be used as the degree of contribution 240 in actual machine learning. Alternatively, the degree of contribution calculation unit 125 may calculate the degree of contribution 240 of a feature 231 based on the number or the frequency of occurrences.

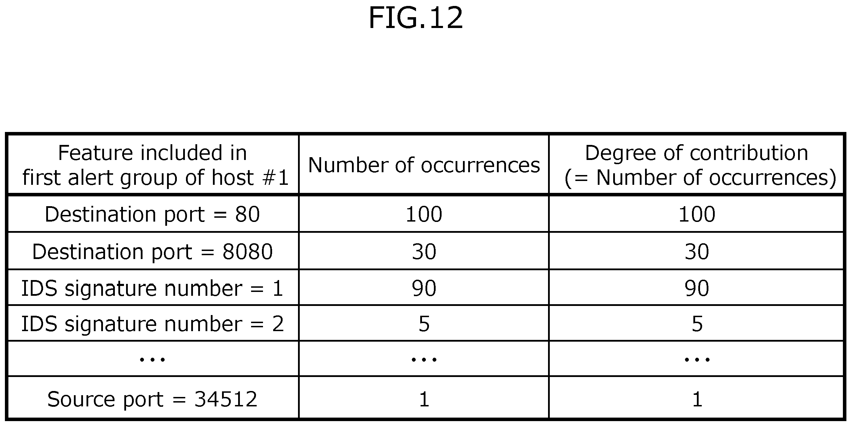

FIG. 12 is a diagram illustrating a second example of the degree of contribution calculation process by the degree of contribution calculation unit 125. In FIG. 12, the features 231 in the first alert group 23 related to Host #1, *i.e*., "destination port = 80", "destination port = 8080", "IDS signature number = 1", "IDS signature number = 2", and "source port = 34512" are exemplified. The numbers of occurrences of the features 231 are 100, 30, 90, 5, and 1, respectively.

In FIG. 12, the degree of contribution calculation unit 125 determines the degree of contribution 240 of each feature 231 based on the number of occurrences. In the second example, the degrees of contribution 240 may be determined so that a higher degree of contribution 240 is given to a greater number of occurrences. According to the method illustrated in FIG. 12, by giving higher degree of contributions 240 to anomalous communications that have greater number of occurrences, alerts related to the anomalous communications that have greater number of occurrences are prevented from being added to the training alert group 21.

In order to prevent the degree of contribution 240 of a feature (*e.g.,* IP header length) which has the same value in almost all alerts from becoming too high, such a feature 231 may be excluded in advance.

In place of the number of occurrences of each of the features 231, the degree of contribution 240 may be the frequency of occurrences (the number of occurrences / the sum of the numbers of occurrences) of each feature 231.

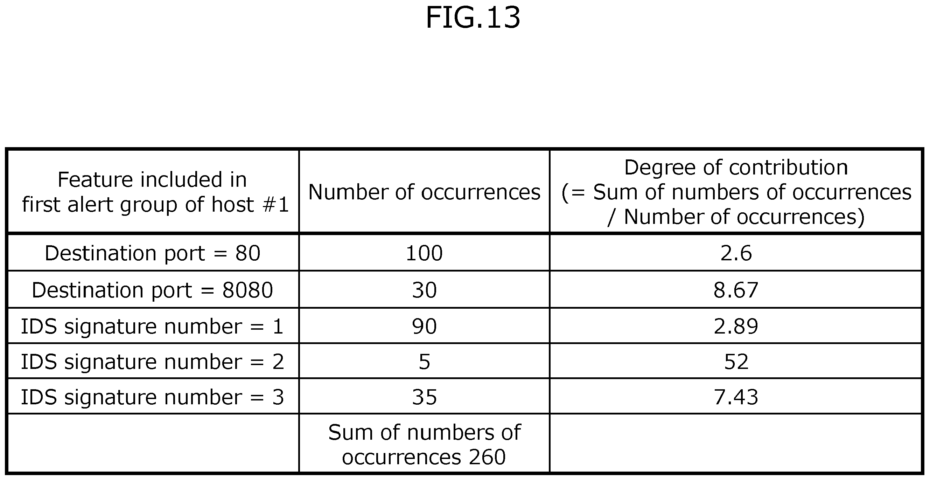

FIG. 13 is a diagram illustrating a third example of the degree of contribution calculation process by the degree of contribution calculation unit 125. In FIG. 13, the features 231 of the first alert group 23 for Host #1, "*i.e.,* destination port = 80", "destination port = 8080", "IDS signature number = 1", "IDS signature number = 2", and "IDS signature number = 3" are exemplified. The numbers of occurrences of the features 231 are 100, 30, 90, 5, and 35, respectively. The sum of the numbers of occurrences of all features 231 is 260.

In FIG. 13, the degree of contribution calculation unit 125 determines the degree of contribution 240 so that a smaller degree of contribution 240 is given to a greater number of occurrences (or a higher frequency of occurrences) . In other words, the degree of contribution calculation unit 125 determines the degree of contribution 240 so that a greater degree of contribution 240 is given to a smaller number of occurrences (or lower frequency of occurrences) . In one example, the degree of contribution 240 may be the reciprocal of the number of occurrences or the reciprocal of the frequency (the sum of the numbers of occurrences / the number of occurrences).

According to the method illustrated in FIG. 13, it is possible to prevent addition to the training alert group 21 of alerts on abnormal anomalous communications that are caused not by frequent anomalous communications but by attacks or the like. The methods in FIGS. 12 and 13 may be selected depending on the purpose of the anomaly detection apparatus 100.

The degree of contribution 240 may be the number of occurrences determined by dividing the sum of the number of occurrences of feature of the similar type by the number of occurrences ("the sum of the number of occurrences of the feature of the similar type" / "the number of occurrences") . The feature of the similar type may be a feature having the same item 232, or a feature having the same item 232 and having a value 233 within a predetermined range.

### [1-3] Examples of operation

### [1-3-1] Training phase

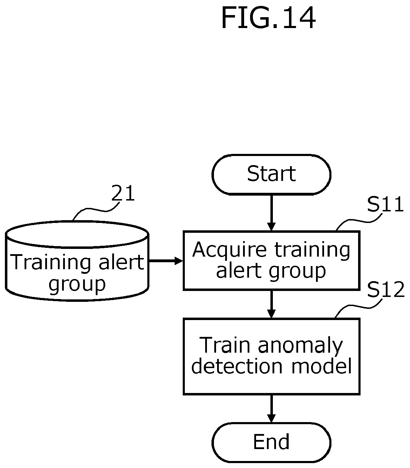

Next, an example of the operation of the anomaly detection apparatus 100 according to one embodiment will be described. FIG. 14 is a flowchart illustrating an example of the operation of the anomaly detection apparatus 100 according to one embodiment in a training phase.

As exemplified in FIG. 14, the data acquisition unit 121 in the anomaly detection apparatus 100 acquires a training alert group 21 as training data (Step S11).

The control unit 110 uses the training alert group 21 to implement the training process (learning process) in machine learning. In other words, the anomaly detection apparatus 100 trains the anomaly detection model 120 (machine learning model) by the control unit 110 (Step S12).

At least one alert from a third alert group 25 is added to the training alert group 21 over time, as will be described below. Accordingly, in the second and subsequent training (retraining) of the anomaly detection model 120, the training alert group 21 to which the alerts have been added will be used.

### [1-3-2] Upon generation of training alert group (inference phase)

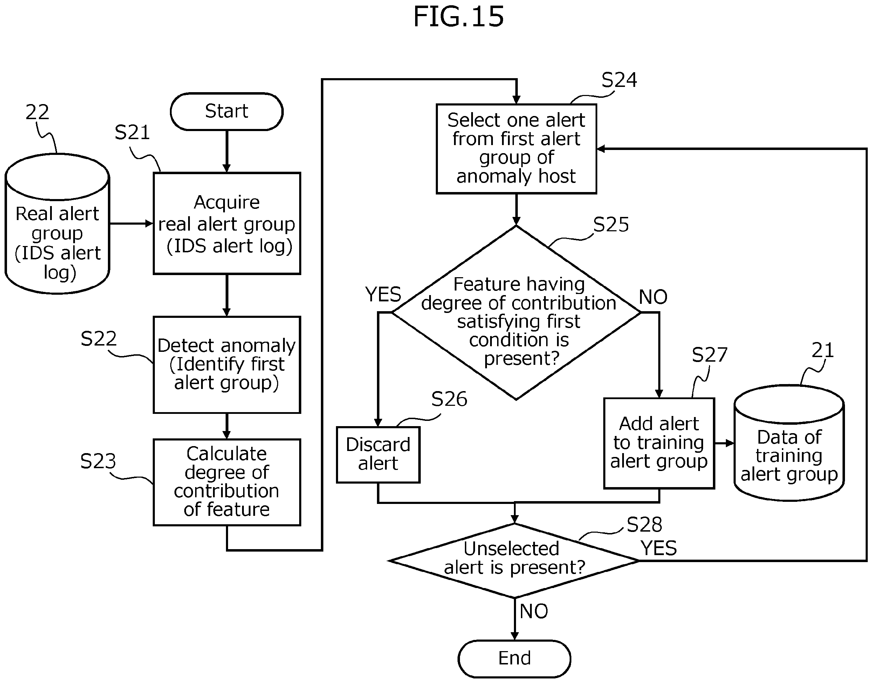

FIG. 15 is a flowchart illustrating an example of the operation upon generation of a training alert group 21 by the anomaly detection apparatus 100 according to one embodiment.

As exemplified in FIG. 15, the data acquisition unit 121 in the anomaly detection apparatus 100 acquires a real alert group 22 (Step S21). The real alert group 22 is a set of alerts that have been generated by the NIDS 1 when the NIDS 1 determines that communications are anomalous. Hence, the real alert group 22 includes false positive alerts.

The control unit 110 performs an anomaly detection (Step S22) . The anomaly host detection unit 122 identifies (detects) an anomaly host 5 performing an anomalous communication based on the anomaly detection model 120 that has been trained. The detection result transmission unit 123 may transmit the detection result on the anomaly host 5 to the operator terminal 3 of the operator 3b or the like. The first alert group identification unit 124 identifies a first alert group 23 related to a plurality of communications performed by the identified anomaly host 5.

The degree of contribution calculation unit 125 calculates, for each first alert 23a included in the first alert group 23, the corresponding degrees of contribution 240 made by the respective features 231 included in the each alert 23a in the identification of the anomaly host 5 (Step S23).

The alert identification unit 126 selects one alert (first alert 23a) from the first alert group 23 of the anomaly host 5 (Step S24).

The alert identification unit 126 determines whether or not the selected alert contains any feature 231 of which degree of contribution 240 satisfies a first condition (Step S25). In one example, the first condition may be such that the degree of contribution 240 is equal to or greater than a certain threshold value.

If the selected alert includes a feature 231 that satisfies the first condition (see the YES route in Step S25), for example, if the alert includes a feature 231 having a degree of contribution 240 of equal to or greater than a certain threshold value, the process proceeds to Step S26. If the selected alert does not contain a feature 231 that satisfies the first condition (see NO route in Step S25), for example, if the alert includes a feature 231 of which degree of contribution 240 is not equal to or greater than the certain threshold value, the process proceeds to Step S27.

The process for the YES route in Step S25 represents one example of the process of identifying, from the first alert group 23, one or more second alerts 24 related to a plurality of communications performed by the identified anomaly host 5, the one or more second alerts 24 including a degree of contribution 240 of a feature 231 included in the alert satisfying a certain first condition.

In other words, the process of the NO route in Step S25 represents one example of the process of identifying one or more alerts as a third alert group 25 from the first alert group 23, the alerts in the third alert group 25 including a degree of contribution 240 of a feature 231 included in the alerts satisfying the certain condition. The certain condition may be such that the degrees of contribution 240 of all features 231 included in an alert are less than a certain threshold value.

In Step S26, the alert identification unit 126 discards the selected alert. The alert to be discarded in Step S26 is the second alert 24. Step S26 represents one example of the process of removing the second alert 24 from the first alert group 23.

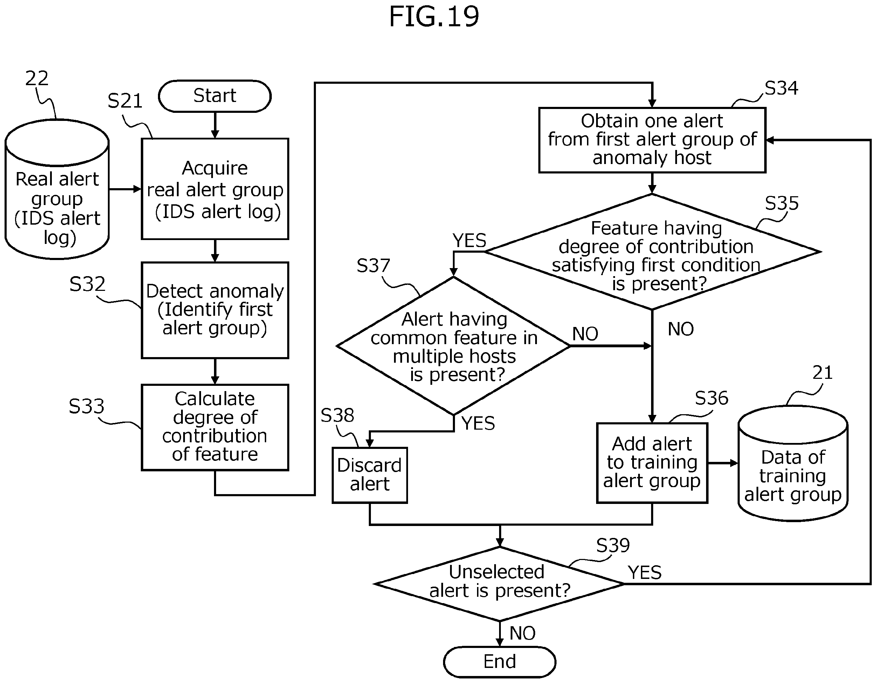

In Step S27, the third alert group addition unit 127 adds the selected alerts to the training alert group 21 (training data) . The process in Step S27 represents one example of the process of adding, to the training alert group 21 (training data) used for training of the anomaly detection model 120 (machine learning model), at least one alert of the third alert group 25, the third alert group 25 being the first alert group 23 excluding the second alert 24. FIG. 19 illustrates an example where all alerts in the third alert group 25 are added to the training alert group 21.

The alert identification unit 126 determines whether or not any unselected (unprocessed) alert is present in the first alert group 23 of the anomaly host 5 (Step S28) . If an unselected alert is present (YES route in Step S28), the process returns to Step S24 and the next alert is selected in Step S24. If no unselected alert is present (NO route in Step S28), the process ends.

### [1-4] Effects of one embodiment

In one method according to one embodiment, the computer 10 implements the functions of the anomaly detection apparatus 100. The computer 10 performs the process of identifying the anomaly host 5 performing an anomalous communication, based on a machine learning model trained with normal communications that satisfy a certain condition as training data. The computer 10 performs the process of adding, to the training data for the machine learning model, an alert of the first alert group 23 related to the plurality communications performed by the identified anomaly host 5, the alert being identified based on a degree of contribution 240 of a feature 231 included in the alert to the identification.

According to the above method, an alert that is identified from the first alert group 23 of the anomaly host 5 in view of the degree of contribution 240 is added to the training alert group 21. This allows at least one alert to be used as training data, rather than discarding the entire first alert group 23 related to the plurality of communications performed by the anomaly host 5. This allows false positive alerts included in the first alert group 23 to be used as the training data, thereby preventing decrease in the volume of the training data and ensuring that a larger volume of training data becomes available. As a result, the learning accuracy of the machine learning model in detection of anomalous communications can be improved.

Furthermore, the alert that is added to the training data is identified based on the degree of contribution 240 of a feature 231 to the identification. Thus, based on degrees of contribution 240, alerts related to attacks are prevented from being added to the training data. This prevents the attack detection capability from decreasing due to addition of alerts related to attacks to the training data.

Furthermore, according to the method according to one embodiment, the process of adding the alert to the training data includes identifying, from the first alert group 23, one or more second alerts 24 including a feature 231 having a degree of contribution 240 of equal to or greater than a certain threshold value. Furthermore, the process of adding the alert to the training data includes adding, to the training data, at least one alert of a third alert group, the third alert group being the first alert group 23 excluding the second alerts 24.

A second alert 24 that includes a feature 231 having a degree of contribution 240 of equal to or greater than a certain threshold value is prevented from being added to the training data. Thus, alerts related to attacks are prevented from being added to the training data. This prevents the attack detection capability from decreasing due to addition of alerts related to attacks to the training data.

Furthermore, according to the method according to one embodiment, the process of identifying of the one or more second alerts 24 includes a prevention process when a plurality of anomaly hosts 5 are identified in the process of identifying an anomaly host 5. The prevention process prevents an alert including a feature 231 that is common in a plurality of first alert groups 23 related to a plurality of communications performed by the respective anomaly hosts 5, from being identified as a second alert 24.

This prevents an alert commonly having a high degree of contribution 240 in alerts of the respective anomaly hosts 5 from being discarded. As a result, only more abnormal alerts are excluded from the training data. This ensures that a larger volume of training data becomes available.

Furthermore, according to a method according to one embodiment, a feature 231 is a combination of an item 232 and the value of that item 232 in each alert in the first alert group 23. The degree of contribution 240 is an indicator of the degree of a basis provided by a feature 231 in identification of an anomaly host 5 as a host performing an anomalous communication.

By making the combination of the item 232 and the value of that item 232 to be taken into consideration, it is possible to prevent an alert related to an attack from being added to the training data based on an indicator of the degree of a basis in identification of an anomaly host 5 as a host performing an anomalous communication.

### [1-5] Modification

In the anomaly detection apparatus 100 according to one embodiment, it has been described that a first alert 23a that includes one or more features 231 having a degree of contribution 240 of equal to or greater than a certain threshold value are added to a second alert 24. In other words, the anomaly detection apparatus 100 prevents inclusion of a first alert 23a that includes one or more of features 231 having a degree of contribution 240 of equal to or greater than the certain threshold value, from being added to the third alert group 25. However, the anomaly detection system 100 is not limited to this case.

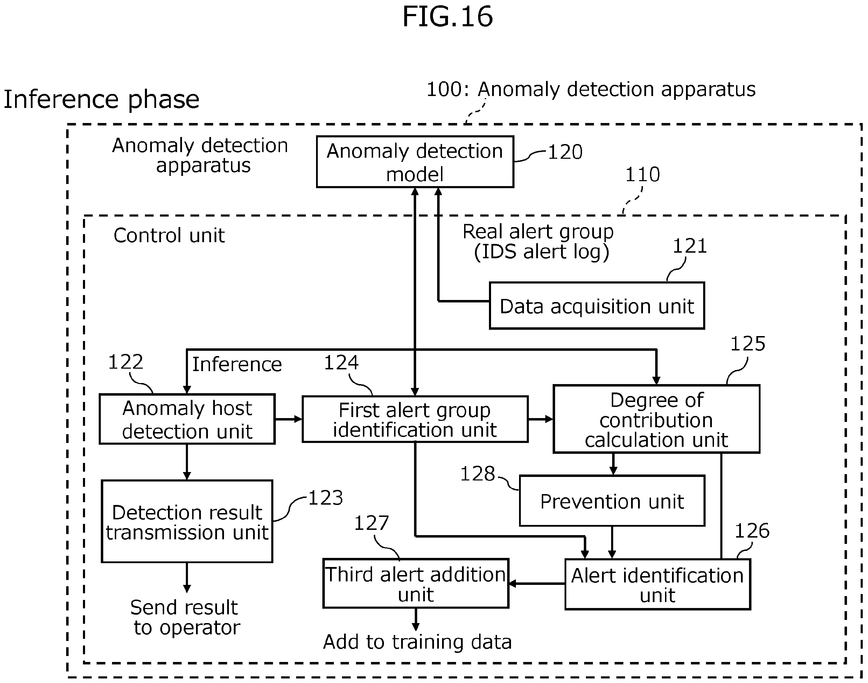

FIG. 16 is a block diagram illustrating an example of the functional configuration of an anomaly detection apparatus 100 according to the modification to one embodiment in the inference phase. In the configuration illustrated in FIG. 16, a prevention unit 128 is added to the configuration illustrated in FIG. 5. The anomaly detection apparatus 100 according to the modification is similar to the configuration of the anomaly detection apparatus 100 according to one embodiment, except for the configuration related to the prevention unit 128. The prevention unit 128 controls operations of the alert identification unit 126 based on the degrees of contribution 240 from the degree of contribution calculation unit 125.

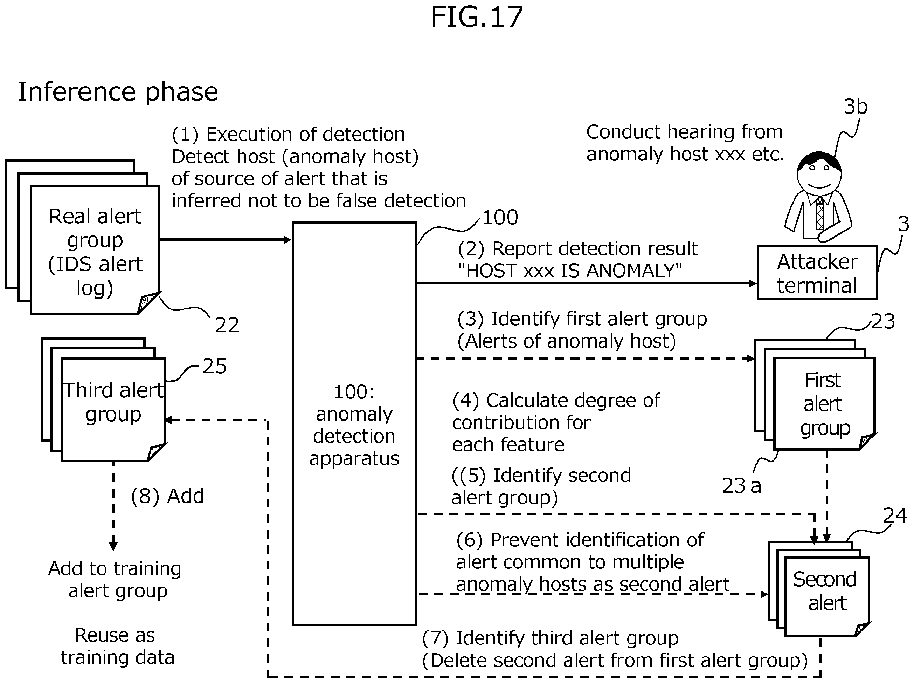

FIG. 17 is a diagram illustrating an example of the operation of the anomaly detection apparatus 100 according to the modification in the inference phase. The processes (1) to (5), (7), and (8) in FIG. 17 are similar to the processes (1) to (7) illustrated in FIG. 4.

As illustrated in (6), when a plurality of anomaly hosts 5 (terminals) are identified by the anomaly host detection unit 122, the prevention unit 128 prevents an alert related to a communication that is commonly performed by the plurality of anomaly hosts 5 (terminals) from being identified as a second alert 24. Specifically, the prevention unit 128 refrains from identifying, as a second alert 24, an alert including a feature 231 that is common in a plurality of first alert groups 23 related to a plurality of communications performed by the respective anomaly hosts 5.

In other words, when a plurality of anomaly hosts 5 are identified by the anomaly host detection unit 122, the prevention unit 128 identifies an alert related to a communication that is commonly performed by the plurality of anomaly hosts 5 as a third alert group 25. Specifically, the prevention unit 128 and the alert identification unit 126 identify, as a third alert group 25, alerts that include a feature 231 that is common in a plurality of first alert groups 23 related to a plurality of communications performed by the respective anomaly hosts 5.

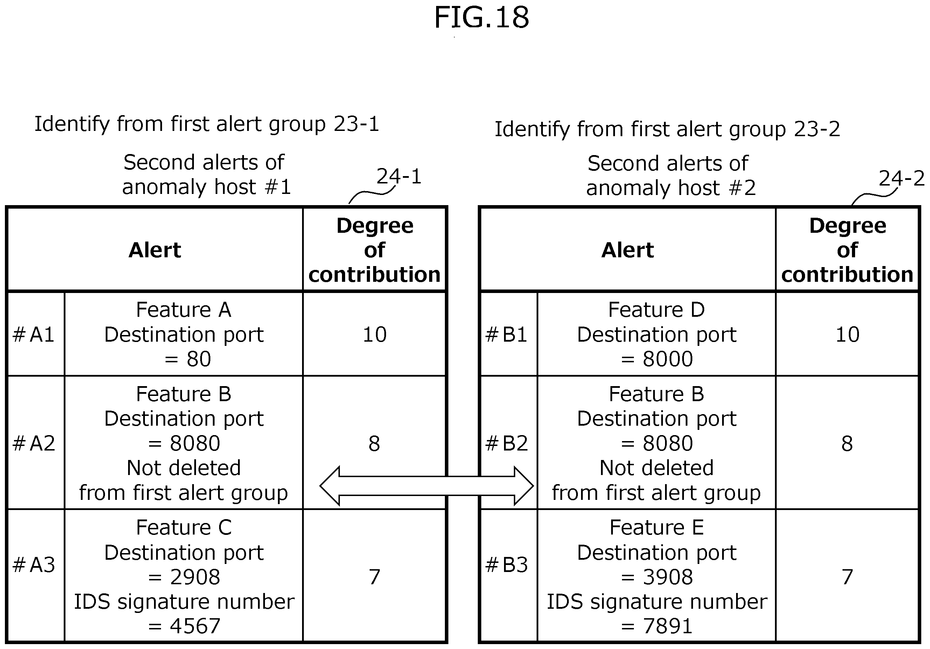

FIG. 18 is a diagram illustrating one example of the process of preventing of identification of a second alert by the prevention unit 128. In FIG. 18, the case in which the anomaly host detection unit 122 detects a plurality of anomaly hosts 5, *e*.*g.*, anomaly Host #1 and anomaly Host #2, is illustrated by way of example.

In FIG. 18, according to the process according to one embodiment, for example, the alert identification unit 126 identifies second alerts 24-1 on Anomaly Host #1 based on the degree of contribution 240, from a first alert group 23-1 of Anomaly Host #1. The alert identification unit 126 identifies second alerts 24-2 on Anomaly Host #2 based on the degree of contribution 240, from a first alert group 23-2 of Anomaly Host #2.

In the example in FIG. 18, the second alerts 24-1 include Alert #A1, Alert #A2, and Alert #A3. The second alerts 24-2 include Alert #B1, Alert #B2, and Alert #B3.

Alert #A1, Alert #A2, and Alert #A3 on Anomaly Host #1 include Feature A (destination port = 80), Feature B (destination port = 8080), and Feature C (destination port = 2908 and IDS signature number = 4567), respectively.

Alert #B1, Alert #B2, and Alert #B3 on Anomaly Host #2 include Feature D (destination port = 8000), Feature B (destination port = 8080), and Feature E (destination port = 3908 and IDS signature number = 7891), respectively. In FIG. 18, in the cases where a plurality of features 231 (Features C and E) are included, the sum of the degrees of contribution 240 of the plurality of features 231 may be used as the degree of contribution.

In FIG. 18, Alert #A2 and Alert #B2 include Feature B that is common in the plurality of the first alert groups 23-1 and 23-2 related to a plurality of communications performed by the respective hosts 5 (#1 and #2) .

In the modification, the prevention unit 128 prevents Alert #A2 and Alert #B2 including Feature B that is common from being identified as second alerts 24. On the other hand, Alerts #A1, #A3, #B1, and #B3 that do not include any common features 231 are identified as second alerts 24.

The alert identification unit 126 refrains from identifying Alert #A2 and Alert #B2 as second alerts 24. As a result, the alert identification unit 126 does not delete (discard) Alert #A2 and Alert #B2 from the first alert groups 23-1 and 23-2.

The remaining alerts in the first alert group 23 excluding the second alerts 24 compose the third alert group 25. In the modification, Alert #A2 and Alert #B2 are not included in the second alert 24, but are included in the third alert group 25. In other words, the prevention unit 128 promotes identification of Alert #A2 and Alert #B2 as the third alert group 25. As a result, Alert #A2 and Alert #B2 included in the third alert group 25 are also added to the training alert group 21.

Communications sent from a plurality of hosts on a regular basis are likely to be false positive alerts and may not be real attacks. Hence, Alert #A2 and Alert #B2, which are likely to be false positive alerts, can be used as training data. However, if an alert including Feature B is a communication typically performed by an attacker 5a, the control unit 110 may apply the method according to one embodiment on the alert including Feature B.

FIG. 19 is a flowchart illustrating an example of the operation upon generation of a training alert group 21 by the anomaly detection apparatus 100 according to the modification. The processes in Steps S31 to S35 in FIG. 19 are similar to those in Steps S21 to S25 in FIG. 18.

If the selected alert does not include any feature 231 that satisfies the first condition (see NO route in Step S35), the process proceeds to Step S36. If the selected alert contains a feature 231 that satisfies the first condition (see the YES route in Step S35), the process proceeds to Step S37.

In Step S36, the third alert group addition unit 127 adds the selected alert to the training alert group 21 (training data) .

In Step S37, the prevention unit 128 determines whether or not an alert including a feature 231 that is common in a plurality of first alert groups 23-1, 23-2, ..., and 23-M (M is an arbitrary integer) related to a plurality of communications performed by the respective hosts 5 is present.

If no alert including a feature 231 that is common in the plurality of first alert groups 23-1, 23-2, ..., and 23-M is present (see NO route in Step S37), the process proceeds to Step S36. If an alert including a feature 231 that is common in a plurality of first alert groups 23 is present (see the YES route in Step S37), the process proceeds to Step S38. If a plurality of anomaly host 5 have not been identified and one anomaly host 5 has been identified (see NO route in Step S37), the process proceeds to Step S36.

In Step S38, the alert identification unit 126 discards the selected alert.

The process in the NO route of Step S37 and the process in Step S36 represent one example of the process of preventing an alert including a feature 231 that is common in alerts in first alert groups 23-1, ..., 23-M of the respective hosts 5, from being identified as a second alert 24. The alert to be discarded in Step S38 is the second alert 24.

In other words, the process in the NO route of Step S37 and the process in Step S36 represent one example of a process of promoting identification of an alert including a feature 231 that is common in alerts in first alert groups 23-1, ..., 23-M of the respective hosts 5 as a third alert group 25.

The alert identification unit 126 determines whether or not any unselected (unprocessed) alert is present in the first alert group 23 of the anomaly host 5 (Step S39) . If any unselected alert is present (YES route in Step S39), the process returns to Step S34 and the next alert is selected in Step S34. If no unselected alert is present (NO route in Step S39), the process ends.

As described above, the method according to the modification can achieve effects similar to the effects of the one embodiment, and can also increase the number of alerts identified as a third alert group 25, thus contributing to enrichment of training data.

### [2] Miscellaneous

The technique according to one embodiment described above can be embodied in the following variations and modifications.

For example, the functional blocks included in the anomaly detection apparatus 100 may be combined together in any combination, or one functional block may be divided.

Furthermore, the anomaly detection apparatus 100 may also have a configuration (system) in which a plurality of apparatuses cooperate with each other via a network to implement the process functions. In this case, various servers or apparatuses, such as DB servers, application servers, and web servers, may cooperate with each other via a network to implement the process functions as the anomaly detection apparatus 100.

### [Reference Signs List]

- 10: Computer
- 10a: Processor
- 1: NIDS
- 2: Network apparatus
- 3: Operator terminal
- 4: Network system to be protected
- 5: Anomaly host
- 21: Training alert group
- 22: Real alert group
- 23: First alert group
- 23a: First alert
- 24: Second alert
- 25: Third alert group
- 100: Anomaly detection apparatus
- 110: Control unit
- 120: Anomaly detection model
- 121: Data acquisition unit
- 122: Anomaly host detection unit
- 123: Detection result transmission unit
- 124: First alert group identification unit
- 125: Degree of contribution calculation unit
- 126: Alert identification unit
- 127: Third alert addition unit
- 128: Prevention unit
- 200: System
- 231: Feature
- 232: Item
- 233: Value
- 240: Degree of contribution

## Claims

1. A detection program for causing a computer to execute a process comprising:
identifying a terminal (5) performing an anomalous communication, based on a machine learning model (120) trained with normal communications that satisfy a certain condition as training data; and
adding, to the training data used for the training of the machine learning model (120), at least one alert of a first alert group related to a plurality of communications performed by the identified terminal (5), the at least one alert being identified based on a degree of contribution of a feature included in the alert to the identification.

2. The detection program according to claim 1, wherein
the adding comprises:
identifying, from the first alert group, one or more second alerts comprising a feature having a degree of contribution of equal to or greater than a certain threshold value; and
adding, to the training data used for the training of the machine learning model (120), at least one alert of a third alert group, the third alert group being the first alert group excluding the identified one or more second alerts.

3. The detection program according to claim 2, wherein
identifying of the one or more second alerts comprises preventing, when a plurality of terminals (5) are identified in the identifying of the terminal (5), an alert comprising a feature that is common in a plurality of first alert groups related to a plurality of communications performed by the respective terminals (5), from being identified as the second alert.

4. The detection program according to any one of claims 1 to 3, wherein
the feature is a combination of an item included in each alert of the first alert group and a value of the item, and
the degree of contribution is an indicator of a degree indicating a basis provided by the feature in the identification of the terminal (5) as a terminal (5) performing an anomalous communication.

5. A detection apparatus comprising:
a processor configured to execute a process comprising:
identifying a terminal (5) performing an anomalous communication, based on a machine learning model (120) trained with normal communications that satisfy a certain condition as training data; and
adding, to the training data used for the training of the machine learning model (120), at least one alert of a first alert group related to a plurality of communications performed by the identified terminal (5), the at least one alert being identified based on a degree of contribution of a feature included in the alert to the identification.

6. The detection apparatus according to claim 5, wherein
the adding comprises:
identifying, from the first alert group, one or more second alerts comprising a feature having a degree of contribution of equal to or greater than a certain threshold value; and
adding, to the training data used for the training of the machine learning model (120), at least one alert of a third alert group, the third alert group being the first alert group excluding the identified one or more second alerts.

7. The detection apparatus according to claim 6, wherein
identifying of the one or more second alerts comprises preventing, when a plurality of terminals (5) are identified in the identifying of the terminal (5), an alert comprising a feature that is common in a plurality of first alert groups related to a plurality of communications performed by the respective terminals (5), from being identified as the second alert.

8. The detection apparatus according to any one of claims 5 to 7, wherein
the feature is a combination of an item included in each alert of the first alert group and a value of the item, and
the degree of contribution is an indicator of a degree indicating a basis provided by the feature in the identification of the terminal (5) as a terminal (5) performing an anomalous communication.

9. A detection method comprising performing by a computer the processes of:
identifying a terminal (5) performing an anomalous communication, based on a machine learning model (120) trained with normal communications that satisfy a certain condition as training data; and
adding, to the training data used for the training of the machine learning model (120), at least one alert of a first alert group related to a plurality of communications performed by the identified terminal (5), the at least one alert being identified based on a degree of contribution of a feature included in the alert to the identification.

10. The detection method according to claim 9, wherein
the adding comprises:
identifying, from the first alert group, one or more second alerts comprising a feature having a degree of contribution of equal to or greater than a certain threshold value; and
adding, to the training data used for the training of the machine learning model (120), at least one alert of a third alert group, the third alert group being the first alert group excluding the identified one or more second alerts.

11. The detection method according to claim 10, wherein
identifying of the one or more second alerts comprises preventing, when a plurality of terminals (5) are identified in the identifying of the terminal (5), an alert comprising a feature that is common in a plurality of first alert groups related to a plurality of communications performed by the respective terminals (5), from being identified as the second alert.

12. The detection method according to any one of claims 9 to 11, wherein
the feature is a combination of an item included in each alert of the first alert group and a value of the item, and
the degree of contribution is an indicator of a degree indicating a basis provided by the feature in the identification of the terminal (5) as a terminal performing an anomalous communication.
